Europäisches Patentamt

European Patent Office

Office européen des brevets

(11) Numéro de publication: **0 223 641
B1**

(12) **FASCICULE DE BREVET EUROPEEN**

(45) Date de publication du fascicule du brevet:
**11.10.89**

(51) Int. Cl.⁴: **B60T 8/18**

(21) Numéro de dépôt: **86402152.2**

(22) Date de dépôt: **01.10.86**

(54) Correcteur de freinage à commande fluidique.

(30) Priorité: **09.10.85 FR 8514946**

(43) Date de publication de la demande:
**27.05.87 Bulletin 87/22**

(45) Mention de la délivrance du brevet:
**11.10.89 Bulletin 89/41**

(84) Etats contractants désignés:
**DE ES GB IT**

(56) Documents cités:
**EP-A- 0 027 420
FR-A- 2 564 401
GB-A- 1 103 027
GB-A- 2 130 322**

(73) Titulaire: **BENDIX France, 126, rue de Stalingrad,
F-93700 Drancy(FR)**

(72) Inventeur: **Perrin, Alain, Résidence Arthur
Rimbaud 10 rue de la République, F-93000 Bobigny(FR)**

(74) Mandataire: **Lejet, Christian et al, Division Technique
Service Brevets BENDIX Europe 126, rue de Stalingrad,
F-93700 Drancy(FR)**

ACTORUM AG

## Description

La présente invention concerne des correcteurs de freinage à commande fluidique qui sont normalement interposés entre une source de pression hydraulique et un circuit de freinage de véhicule.

Un tel correcteur est décrit dans la demande de brevet français FR-A 2 564 401 au nom de la Demanderesse. Le dispositif décrit dans ce document comprend deux alésages en parallèle dans chacun desquels est monté à coulissement un piston hydraulique controlant l'écoulement d'un fluide sous pression dans un circuit de freinage respectif. Les deux pistons sont déplaçables sous l'action d'un palonnier commun qui prend appui à basculement sur une tige de commande d'un cylindre pneumatique.

Malgré ses avantages, le dispositif précédent présente de légers inconvénients car, en cas de défaillance du cylindre pneumatique, la tige de commande n'assure pas le maintien en contact du palonnier avec les deux pistons et la mise en oeuvre du correcteur s'en trouve affectée.

La présente invention a donc pour objet de résoudre ce problème et de proposer un correcteur perfectionné où, même en cas de défaillance du cylindre fluidique, un fonctionnement satisfaisant des deux pistons est assuré.

Pour ce faire, l'invention propose un correcteur de freinage à commande fluidique comprenant un boîtier 12 comportant deux alésages 14-14' dans chacun desquels est monté à coulissement un moyen de piston 16-16', chaque moyen de piston 16-16' étant susceptible de contrôler l'écoulement d'un fluide hydraulique dans un circuit de freinage respectif, les deux moyens de piston 16-16' étant déplaçables sous l'action d'un palonnier 30 monté à basculement sur une tige de commande 46-48 reliée à un moyen de piston 36-44 d'un cylindre fluidique 42 caractérisé en ce que le correcteur comprend, en outre, un moyen de ressort 60 sur la tige de commande 46-48 pour maintenir cette dernière en appui contre le palonnier.

D'autres caractéristiques et avantages de la présente invention ressortiront de la description suivante d'un mode de réalisation, donné à titre illustratif mais nullement limitatif, faite en relation avec les dessins annexés sur lesquels :

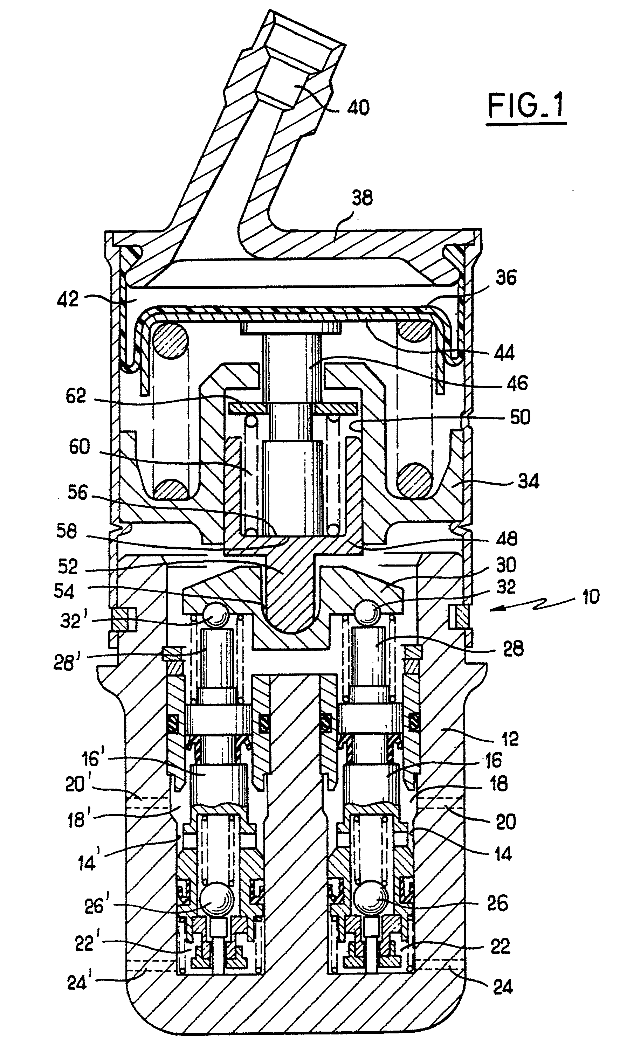

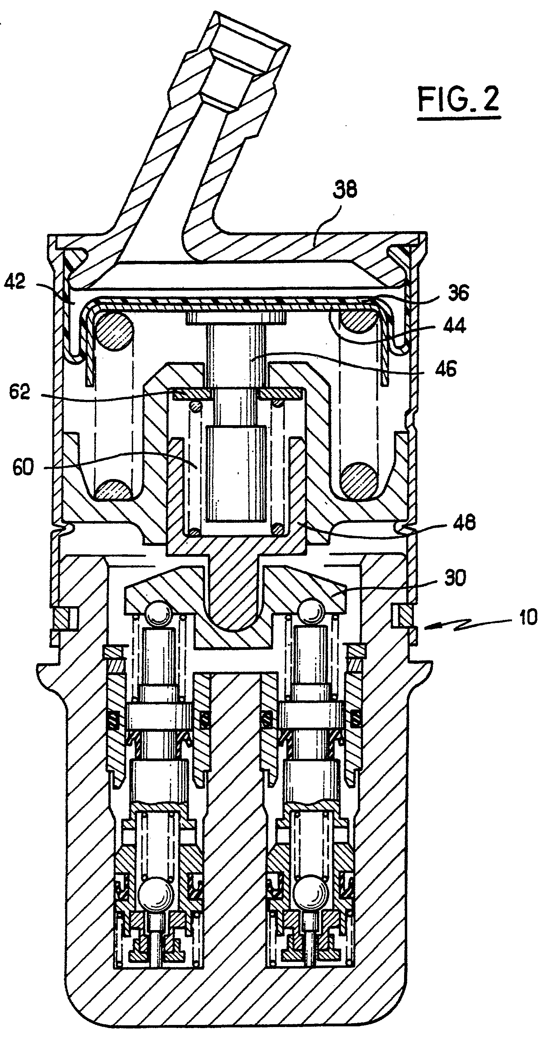

- Les figures 1 et 2 sont chacune une vue en coupe longitudinale d'un correcteur de freinage selon l'invention, montrant le correcteur dans ses conditions normales d'utilisation, d'une part, et ses conditions d'utilisation en cas de défaillance de la source fluidique, d'autre part.

Comme représenté sur les figures, le correcteur de freinage, désigné dans son ensemble par la référence 10, comporte un boîtier 12 dans lequel sont formés deux alésages parallèles 14 et 14'. Ces deux alésages 14 et 14' reçoivent respectivement chacun un piston 16 et 16' étagé, susceptible de coulisser de façon étanche par rapport au boîtier 12. Ces pistons 16 et 16' délimitent dans l'alésage correspondant une première chambre 18 et 18' susceptible d'être reliée à une source de pression de fluide (non représentée) au travers d'orifices d'alimentation 20 et 20', respectivement, représentés schématiquement sur la figure. Les pistons 16 et 16' délimitent chacun une deuxième chambre 22 et 22' définie entre le fond de l'alésage et le piston correspondant, et susceptible d'être relié à un circuit de freinage (non représenté), par exemple les roues arrières du véhicule au travers d'orifices de sortie 24 et 24 représentés schématiquement sur la figure. D'une façon conventionnelle, les pistons 16 et 16' comportent une soupape, désignée dans son ensemble par la référence 26 et 26', susceptible de mettre en communication les chambre 18 et 22 ou 18' et 22' suivant la position occupée par les pistons 16 et 16' par rapport au boîtier 12. La figure représente les pistons 16 et 16' dans une position fermée des soupapes. Les pistons hydrauliques 16 et 16' présentent des extrémités 28 et 28' qui se projettent hors des alésages 14 et 14' et sur lesquels vient en appui un palonnier 30 au travers d'éléments d'appui présentant des surfaces sphériques 32 et 32'.

Dans le mode de réalisation représenté, les pistons hydrauliques 16 et 16' sont étagés de manière à ce que le correcteur de freinage 10 fonctionne en compensateur, c'est à dire qu'après fermeture des soupapes toute augmentation de pression dans les premières chambres 18 et 18' entraîne une augmentation de pression moindre dans les chambres 22 et 22' d'une manière bien connue de l'homme de l'art.

Le dispositif comprend, en outre, une cloison 34 montée fixe dans le boîtier 12 et une membrane déroulante 36. Un élément de fermeture 38 comporte un orifice d'entrée 40 menant à une chambre de pression 42 et destiné à être relié à une source de pression pneumatique, par exemple, la pression de suspension du véhicule. La membrane 36 s'appuie par sa partie centrale sur le voile 44 d'un piston 46 qui passe à travers la cloison 34. Un élément de commande 48 est reçu à coulissement dans un alésage 50 de la cloison 34 et comporte une tige de poussée 52 qui est reçue dans une gorge à fond hémisphérique 54 du palonnier 30.

Selon l'invention, le piston 46 comprend à son extrémité une surface plane 56 qui, en fonctionnement normal du dispositif, vient en appui contre une surface interne correspondante 58 de l'élément de commande 48. Un ressort 60 est monté autour du piston 46 et est retenu entre la surface interne 58 et un circlips 62 monté fixe sur le piston 46.

En fonctionnement normal, la pression pneumatique dans la chambre 42 déplace la membrane 36 vers le bas (en regardant les dessins) déplaçant ainsi le piston 46, l'élément de commande et le palonnier 30. Le transit de fluide hydraulique par les deux pistons 16 et 16' du correcteur est donc modifié en fonction de la pression pneumatique dans la chambre 42.

En cas de défaillance du circuit pneumatique, la pression dans la chambre 42 chute et l'ensemble membrane 36/voile 44/piston 46 se déplace vers le haut (en regardant les dessins) et adopte la position représentée sur la figure 2. Selon l'invention, le ressort 60 maintient l'élément de commande 48 en appui contre le palonnier 30, assurant ainsi le fonctionnement équilibré des pistons du correcteur.

En cas d'absence de pression pneumatique dans le cylindre 42, le fait que le ressort 60 maintienne la tige de poussée 52 en appui sur le palonnier 30, a pour résultat que la purge du dispositif est facilitée, les clapets, dans leur position de repos du correcteur demeurant ouverts.

Il est clair que le piston à commande pneumatique pourrait être remplacé par un piston à commande hydraulique, sans sortir du cadre de la présente invention.

## Revendications

1. correcteur de freinage à commande fluidique comprenant un boîtier (12) comportant deux alésages (14, 14') dans chacun desquels est monté à coulissement un moyen de piston (16, 16'), chaque moyen de piston (16, 16') étant susceptible de contrôler l'écoulement d'un fluide hydraulique dans un circuit de freinage respectif, les deux moyens de piston (16, 16') étant déplaçables sous l'action d'un palonnier (30) monté à basculement sur une tige de commande (46, 48) reliée à un moyen de piston (36, 44) d'un cylindre fluidique (42) caractérisé en ce que le correcteur comprend, en outre, un moyen de ressort (60) sur la tige de commande (46, 48) pour maintenir cette dernière en appui contre le palonnier.

2. Correcteur selon la revendication 1, caractérisé en ce que la tige de commande (46, 48) comprend un piston (46) et un élément de commande (48), le moyen de ressort (60) étant interposé entre le piston (46) et l'élément de commande (48).

## Claims

1. Fluid controlled brake corrector comprising a housing (12) having two bores (14, 14'), in each of which a piston means (16, 16') is slideably mounted, each piston means (16, 16') being capable of controlling the flow of a hydraulic fluid in a particular brake circuit, and the said two piston means (16, 16') being displaceable under the action of a rocker (30) mounted pivotably on a control rod (46, 48) connected to a piston means (36, 44) of a fluid cylinder (42), characterized in that the corrector also comprises a spring means (60) on the said control rod (46, 48) to keep the latter up against the said rocker.

2. Corrector according to Claim 1, characterized in that the said control rod (46, 48) comprises a piston (46) and a control element (48), the said spring means (60) being interposed between the said piston (46) and the said control element (48).

## Patentansprüche

1. Brems-Korrektureinrichtung mit fluidischer Steuerung, mit einem zwei Bohrungen (14, 14') umfassenden Gehäuse (12), wobei in jeder Bohrung ein Kolbenmittel (16, 16') gleitend gelagert ist und jedes Kolbenmittel (16, 16') dazu geeignet ist, die Strömung eines hydraulischen Fluids in einem jeweiligen Bremskreis zu steuern, die beiden Kolbenmittel (16, 16') unter der Wirkung eines Steuerhebels (30) verschiebbar sind, welcher auf einer mit einem Kolbenmittel (36, 44) eines fluidischen Zylinders (42) verbundenen Steuerstange (46, 48) verschwenkbar gelagert ist, dadurch gekennzeichnet, daß die Korrektureinrichtung ferner auf der Steuerstange (46, 48) ein Federmittel (60) umfaßt, um diese auf dem Steuerhebel abgestützt festzuhalten.

2. Korrektureinrichtung nach Anspruch 1, dadurch gekennzeichnet, daß die Steuerstange (46, 48) einen Kolben (46) sowie ein Steuerelement (48) umfaßt, wobei das Federmittel (60) zwischen dem Kolben (46) und dem Steuerelement (48) eingefügt ist.

FIG.1

EP 0 223 641 B1

FIG. 2